(19) Europäisches Patentamt
European Patent Office
Office européen des brevets

(11) **EP 2 131 552 B1**

(12) **EUROPEAN PATENT SPECIFICATION**

(45) Date of publication and mention
of the grant of the patent:
**17.05.2017 Bulletin 2017/20**

(51) Int Cl.:
***H04L 29/06*** *(2006.01)*  ***H04L 29/08*** *(2006.01)*

(21) Application number: **09007263.8**

(22) Date of filing: **30.05.2009**

(54) **A METHOD FOR CREATING COMMUNITY OF STRANGERS USING TRUST BASED REPUTATION METHODS**

VERFAHREN ZUM ANLEGEN EINER GEMEINSCHAFT VON UNBEKANNTEN UNTER VERWENDUNG VON VERTRAUENSBASIERTEN REPUTATIONSVERFAHREN

PROCÉDÉ DE CRÉATION D'UNE COMMUNAUTÉ D'ÉTRANGERS UTILISANT DES PROCÉDÉS DE RÉPUTATION EN FONCTION DE CONFIANCE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **05.06.2008 IL 19197908**

(43) Date of publication of application:
**09.12.2009 Bulletin 2009/50**

(73) Proprietor: **Deutsche Telekom AG**
**53113 Bonn (DE)**

(72) Inventors:
• **Gal-Oz, Nurit**
**Levahim 85338 (IL)**
• **Gudes, Ehud**
**Beer-Sheva 84716 (IL)**
• **Hendler, Dan**
**Kiryat Ono 55238 (IL)**

(74) Representative: **Flaccus, Rolf-Dieter**
**Flaccus · Müller-Wolff**
**Patentanwälte**
**Bussardweg 10**
**50389 Wesseling (DE)**

(56) References cited:
**EP-A2- 1 528 498      US-A1- 2004 088 369**
**US-A1- 2004 122 803**

**Description**

**Field of the Invention**

The present invention relates to the field of distributed environments. More particularly, the invention relates to a method for creating trust-based communities of strangers using a trust-based reputation model.

**Background of the Invention**

Trust and Reputation systems in distributed environments (e.g. the internet network) attain widespread interest as online communities are becoming an inherent part of the daily routine of internet users. Trust-based models enable safer operation within communities to which information exchange and peer to peer interaction are centric. However, the development of such models is met with many technical hurdles.

A community (virtual or online community) is a group of people (e.g. entities, nodes, peers or agents acting on behalf of people), interacting via computer network for a common interest. Different communities serve various needs of social groups in different levels of interaction. Communities of strangers is a community of anonymous people who would like to participate, i.e. contribute and benefit from the community activity, without revealing personal information. This is in contrast with recently very popular internet communities of identifies users (e.g. 'Facebook', 'Linkedin' etc.)

There are typically two types of users in the community. **Members,** who are potential participants in community activities, such as searching for, interacting with, and sharing recommendations on experts, and **Experts,** who are subclass of members of the community providing professional services. The terms "member" and "expert" will be used from here on, to denote the two types. At first, for the sake of simplicity, experts and members are referred to as two disjoint groups, although any expert is also a member. An Interaction between a member and an expert is referred to as a **"Transaction".** A transaction can be performed via email, instant messaging, phone etc. A member may (and should be encouraged to) rate an expert upon completion of each transaction. Rating is considered private information owned by a member. Members are encouraged to share ratings with the community without need to reveal their identity, keeping their privacy protected. Members are represented by software agents. The only operations done directly by members are transactions and ratings.

Although reference is made herein particularly to "Experts" and "Members", it will be apparent to the skilled person that you mention is not limited to such users and can be applied to many types of communities, including existing communities such as eBay or Facebook. Therefore, when reference is made below to experts and members it should be appreciated that the description applies, *mutatis mutandis,* to any other relevant persons and communities, and reference to specific examples is only made for the sake of brevity.

Prior art methods for creating communities of strangers suffer from some problem. The first problem is dealing with multi-modal distribution of trust scores used to calculate reputation. Consider a person who has very good reputation within one group of people and very bad reputation within another group. Can her reputation concluded as reasonable? If so, is important information omitted for either group?

The second problem is establishing trust in a community of strangers having no direct interaction between them. The third problem is prevention of fraud. There are people in communities who try to gain reputation using false recommendations.

US 2004/088369 discloses using mobile agents to gather trust information for evaluating trust in peer-to-peer networks. A peer node may launch a mobile agent on a network including an itinerary of peer nodes to be visited by the mobile agent and an indication of an area of interest. The mobile agent may determine if a visited peer node stores trust evaluations for other peer nodes as providers of codats relevant to the area of interest and, if so, the trust evaluations may be stored as payload data in the mobile agent. After completing the itinerary, the mobile agent may return the payload to the initiating peer node. The initiating peer node may use the trust evaluations collected by the mobile agent in determining or adjusting trust evaluations for peer nodes as providers of codats relevant to the area of interest.

EP 1 528 498 discloses a method of and apparatus for defining the relations among various subjects concerned with consumption activities, calculating trust values of these subjects and providing information which consumers can use in consumption activities with high reliability. This method provides information about subjects which are coincident with tastes of individuals and credibly reflect taste information of the individuals concerned. Trust values are calculated without limiting the information to information on the Internet and by expanding the trust value information to various relations among subjects in consumption activities.

US 2004/122803 discloses a method and structure that identifies relationships between users of a computerized network. The method extracts relationship information from databases in the network. The information includes address book information, calendar information, event information, to-do list information, journal information, and/or e-mail information. The invention evaluates the relationship information to produce relationship ratings of the users of the network. The invention determines the level of reciprocity of relations between different users; a longevity of relations between the different users; how current relations are between the different users; a frequency of relations between the different users; a level of exclusivity of relations between the different users; a level of complexity of relations between the different users; and/or a proximity of the different users. This method is used to identify relationships between users of a social network based on their address book information calendar information and other personal information.

It is therefore an object of the present invention to provide a method to overcome the aforementioned drawback and to create trustworthy communities.

It is another object of the present invention to provide a method for establishing trust among members and for using the established trust values to compute reputations using a model based on the concept of Knots (Sub-Communities).

It is still another object of the present invention to provide a method in which the model comprises three major phases: inferring trust among members, constructing knots, and computing reputations on top of them.

It is still another object of the present invention to provide a method to measure similarity among users as implicit trust between them.

It is still another object of the present invention to provide a method where fraud and malicious attempts to influence reputation of members and experts are blocked.

It is still another object of the present invention to provide a method for providing cross community reputation, i.e. sharing the reputation of experts between various communities.

Further purposes and advantages of this invention will become apparent as the description proceeds.

## Summary of the Invention

The invention is defined as the method of claim 1, with various embodiments as presented in the dependent claims. All the above and other characteristics and advantages of the invention will be further understood through the following illustrative and non-limitative description of preferred embodiments thereof, with reference to the appended drawings.

## Brief Description of the Drawings

The above and other characteristics and advantages of the invention will be better understood through the following illustrative and non-limitative detailed description of preferred embodiments thereof, with reference to the appended drawings, wherein:

- Fig. 1A is an extremely simplified example that illustrates the principle of a community structure;
- Fig. 1B shows a focusing view on knot 300 from Fig. 1A; and
- Fig. 2 is a schematically illustration of a decision-making process for choosing an expert as according to an embodiment.

## Detailed Description of Preferred Embodiments

In a community according to an embodiment, experts in some specific field offer their consulting services to community members seeking such services. Members are enabled to obtain a reliable measure of an expert's reputation. Reference materials are grouped in the appended Bibliography which immediately precedes the claims. In an embodiment, knots (sub-communities) are used and incentives are provided for contributing to the community while inherently blocking attempts to bias trust and reputation values. A Knot is a group of members having overall strong trust relations among them. Each Knot may potentially represent different view points and measures and therefore may assign different levels of reputation to the same person. This approach enables dealing with heterogeneous communities where one's reputation may be distributed in a multi modal manner. An embodiment comprises a method for constructing knots, which are based on trust among their members. According to the model that represents the method of the invention, trust and reputation are measurable values. The model which is presented below will follow few definitions and explanations which are described hereinafter.

The definition of 'Trust' as suggested in [5] emphasizes two major aspects of trust: the difference in human nature and the accumulated experience. The present invention extends this definition to allow transitivity of Trust, i.e. allowing members to use the trust which their trusted members have in experts when establishing their own trust in those experts.

The present invention uses the term 'trust' in two contexts as suggested in [1]:

Trust Member (TM) - Trust in the context of providing a recommendation. A trust value used for expressing the extent to which one member relies on another to rate correctly, where 'correct' is relative to the trusting member's standards. Two members, who constantly rate various experts in the same manner, are likely to rely on the advice of each other in the future.

**Trust Expert** (TE) - Trust in the context of consulting in the area of expertise of an expert, including being honest, knowledgeable and safe to exchange data with. A trust value used for expressing the extent of a member relies on an expert to complete a successful transaction.

The term 'behavior' as mentioned in the above definition of Trust Expert relates to the quality of the service the experts provide. For Trust Members, the term behavior captures the accuracy of their recommendations. In a community of strangers, the best information one can use to gain trust in another is the past recommendations of the last on experts and the extent to which the recommendations match the opinions of the first on the same experts.

**Member Similarity** (SIM) in this invention is used to calculate implicit trust among members (i.e. to calculate TM) having no interaction between them. **Implicit Trust** is defined in terms of similarity and the confidence in this similarity. SIM is based on rating similarity over time. However, SIM alone cannot serve as a measure for trust. The dynamic nature of trust is that trust evolves with time as a result of more interactions. It may decrease or increase and is subject to the full history of transactions in the system.

Reputation systems suggest various metrics for calculating this measure. Most of them compiling an aggregated general opinion given by all recommending members. Some of these systems disregard ratings falling too far from the popular rating score or consider them as malicious [3]. The present invention considers that the same experience may be perceived differently by different people. For example, a PC expert may get wonderful scores from a person with no experience with PC, but very poor scores from an experienced PC user. Reputation is the aggregated perception that an agent creates through past actions about its intentions and norms (an extension of [5]). This definition captures the time aspect as well as the subjective (perception) nature of reputation. Reputation reflects the way an entity is perceived by a community, which is not necessarily unified and thus cannot be presented by a single score.

**Rating** is an evaluation of the quality of a transaction. There are various dimensions through which one can evaluate a transaction. For example, one can be very pleased with the service she purchased but also very disappointed by the process of the purchasing (e.g. availability, courtesy, proficiency, etc.). A dimension based rating is a vector of values in the range [0,1]. Each value represents the degree of satisfaction with the transaction in a certain dimension. While some of the dimensions tightly depend on the transaction, others are more general, and may be considered as universal measures. The dimension vector may be used in the community level or as a personal member preference. An illustrative and non-limitative example of such a vector is the following:

Consider a community in which members may offer their services as power point experts.

The dimensions:

| 1. | Politeness | 0.9 |
|----|-----------|-----|
| 2. | Price | 0.5 |
| 3. | Response time | 0.8 |
| 4. | Fluent in English | 0.9 |
| 5. | Ability to guide and explain | 0.8 |
| 6. | General Knowledge in PowerPoint | 1 |
| 7. | Solved the problem | 1 |

In the above example we have Politeness Price Response time and Fluent in English (to enable easy communication) as universal measures. The ability to guide and explain, general knowledge in PowerPoint and the question if the problem was solved (fully or partially) are specific dimensions that are not relevant to other communities the expert may be involved in such as, for example, "consulting in home gardening".

The rating vector in this example could be given by a member which is very satisfied with the actual performance of the expert, generally pleased with the expert behavior, but not at all pleased with the price she charges.

**Rating Similarity** (RS) quantifies the similarity between two comparable ratings (i.e., ratings given on the same expert in the same context within some limited time interval). The rating similarity of two ratings is defined using a distance function such as the Euclidean distance between the two rating vectors.. Rating vectors are given on the same expert within a limited time interval in order to avoid comparing two ratings given too long apart from each other. RS of two ratings given by two different members serves as an implicit rating of each other, i.e. each member rates the other in terms of how valuable is her rating (how close to her own). Due to the dynamic nature of human beings it must be taken into account that the change in rating of an expert reflects the change in the behavior of a member or an expert over time.

The calculated value should take into account that people change. For example an expert that got good ratings in the past may have too many clients now and therefore is service level decreased. An opposite example - he got bad ratings in the past and does his best to improve her service. The method of the invention takes time into account, by splitting history into a set of time intervals, each of which is assigned a different weight. This set may change over time and the sum of interval weights is 1. Typically, more recent time intervals will be assigned higher weights as suggested in [1]. In any instance of time, we only compare two ratings if they belong to the same time interval. Therefore the ratings are divided and compared according to the time at which they were given.

**Member Similarity** (SIM) measures the resemblance of two members, based on their common experience (RS- rating similarity). The similarity between two members may change with time as reflected by their RS.

A **Trust Set** of a member at some point in time is the subset of community members that the member trusts. The idea behind the Trust Set is to allow every member to rely on people having the same factors and personal standards to establish trust in the same manner, up to some measurable degree. As in real life, the recommendation of few people, that one considers to think like them, is more focused and valuable than the calculated rating based on thousands of random people whom opinions will probably spread over a wider range. The benefit of using Trust-Sets limits the recommendation process to a smaller group of better qualified members for the task, while increasing the chance to obtain more accurate results.

The trust set of a member denotes the set of all members trusted by him or her with at least $\alpha$, i.e. each member on a trust set trusts every member in the set with a least $\alpha$. In other words, $\alpha$ describes a community that requires $\alpha$ as the minimum value considered as trust. The value of $\alpha$ is determined by the host domain of a community and/or by the community itself.

Trust among members is used to calculate **Trust Expert.** The trust a member has in an expert is based on the experience the member had with that expert, i.e. his or her evaluation of the expert along time. In the absence of such experience, the trust of a member in an expert is built on the trust on that expert of other members he or she trusts. (For the sake of brevity, the terms "he" and "his" are used hereinafter to denote both the masculine and the feminine member of the community.)

A **Knot** is a subset of community members which are identified as having overall strong trust relations among them. Every member within the knot should have some level of direct or indirect trust in any other member of the knot. Two members A and B belong to the same knot if A has high enough direct trust in B (this implies that B is in A's trust set) or if A has high enough indirect trust in B (e.g., if A trusts C and C trusts B and by applying the transitive property of trust we conclude that A trusts B), and vice versa. In other words, A and B trust each other either directly or transitively via a third member C.

Knots are an extension of trust sets to create groups of members that can use each other as referees even if they did not have any common basis for interaction or comparison.

Trust propagation is the principle used by many prior art methods to derive trust relationship from pre existing trust relationship. Unlike in the prior art, the present invention avoids using trust propagation, which decreases the level of trust between two members as the path between them grows. Instead, the present invention uses the transitivity property to make sure that there is a predefined level of propagated trust among members. Highly trusted members are identified within each knot. Once a member A is added to a knot, it relies on the recommendations of these members even if A itself does not have high trust in them (either directly or indirectly).

The knot provides each member with recommendations on various experts. All members of a knot contribute their recommendation if they have direct experience with experts. A member who has no other member trusting him cannot belong to any knot.

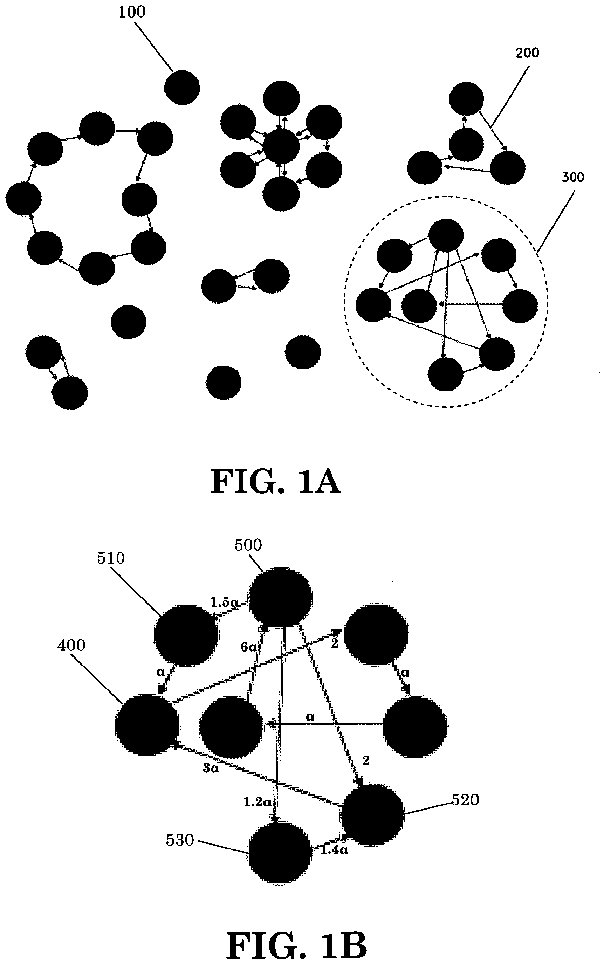

**Fig 1A-** shows an extremely simplified example in order to illustrate the principle of a community structure. The community is described as a directed graph in which nodes (e.g., node 100) are members and an edge (e.g., edge 200) from one node to another symbolizes a direct trust from the first member to the other. The set of edges consists of two subsets of edges: Positive Edged and Negative edges. According to the invention we define the edges with weight at least $\alpha$ as Positive Edges, and all other edges as Negative Edges. A clustering algorithm is used to partition the graph into a collection of subgraphs that represent knots. More formally, a knot is defined as a cluster of vertices, from each of which there exists a path of positive edges of length k or less (for some system parameter k) to any other, and in which the number of negative edges does not exceed some system threshold (possibly zero). Non edge in this case is better than a negative edge (a negative edge represents low trust while a non existing edge represents lack of knowledge). The sub-graphs (e.g. 300) represent knots of members trusting each other with relatively high trust level.

**Fig 1B-** shows a focusing view on knot 300 of Fig. 1A. The weight on every edge stands for the level of trust. The sum of all weights of edges directed to a vertex (i.e., a node) symbolizes the 'amount' of trust this vertex has within the community or in other words, a measure of a member's trustworthiness. This in fact, is the Member Local Reputation-MLR. For example, node 400 has two edges directed to it. One edge with trust measure of 0.7 and the other with trust measure of 0.8, therefore node 400 has a total trust measure of 1.5. As aforementioned, a knot is an extension of a trust set. For example, the trust set of level alpha = at most 0.78 of member 500 comprises members 510, 520 and 530. The **Strength** of each knot is obtained by the total weight of all edges on the sub-graph representing this knot. In the present example, the strength of the knot 300 is 0.81+ 0.7 + 0.82 + 0.75 + 0.7 + 0.7 + 0.8 + 0.75 + 0.78 + 0.79 = 7.6. The Strength of a knot containing a single member is 0. The real life meaning of this is that ratings given by new members will be disregarded until they gain trust within the community. The Global reputation of a new expert after his first transaction can be calculated based on rating from a single member, but only if that member belongs to a knot, that is he is trusted by a group of members. This way malicious attempts by experts to gain reputation from friends registered as new members for that purpose are prevented.

The terms Global Reputation (GR) and Local Reputation (LR) are used herein to make the distinction between the whole community and some sub-communities. LR is the reputation of a member/expert as perceived by members of the knot, based on information collected by the knot members, while GR is based on the complete data collected in the whole community. LR of a member/expert in this model is a normalized sum of all the incoming edges of a member's node, i.e. sum of all the members who directly rated the expert. Normalizing is done respectively to the reputation of each rating member, i.e. members with higher reputation within the knot contribute more to the final score.

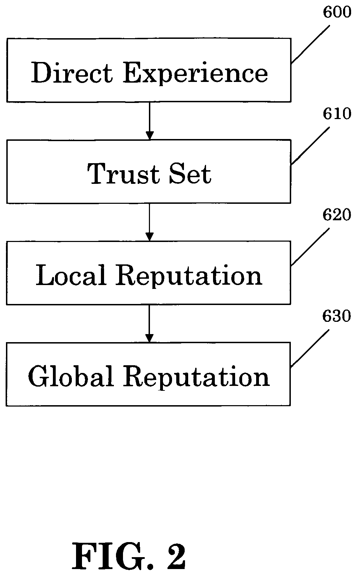

**Fig 2-** is a schematically illustration of a decision-making process for choosing an expert according to the method of the invention. An agent of a member extends the circle of recommenders around it in each step. A GR of a member/expert is calculated using the various LR the member/expert has in all the knots. The LR of a member/expert is calculated using:

**MLR -** Member Local Reputation within a knot is calculated by the trust the members of that member's knot have for this member.

**ELR -** Expert Local Reputation as perceived by a knot is calculated by the direct experience members of that knot had with the expert weighted by their relative MLR.

TE (Trust Expert), the trust a member puts in an expert, is used to assist a member to take a decision by consulting with an appropriate expert. In order to choose an expert, at first- step 600, the direct experience the member has with the expert is considered. If there is no direct experience with the expert, the trust set of the member is checked in step 610. In case there is no information with respect to the expert there, the LR of the expert within the knot of the member is checked in step 620. Finally, if there is no LR for that expert within the knot, the whole community is checked by using the GR score in step 630. After an expert was chosen and a transaction was made, the member will have a direct experience with that expert.

The model

The following equations construct the trust set of a member.

Let $R^t(A,x)$ denotes a rating vector given by member A at time t with respect to expert x.

Let $W_{Ti} \cdot R^{Ti}(A,x)$ be the average rating vector given by member A with respect to expert x in time interval $T_i$ with weight $W_{Ti}$, where $W_{Ti}$ is the normalized weight of the rating member in time interval $T_i$.

$R^{Ti}(A,x)$ is a null vector if no relevant rating exist in $T_i$.

The *Difference* between two users in time $t \in T_j$ is:

$$Difference^t(A,B) = \sum_{T_j \in TI} W_{T_j} \cdot Average_{x \in X}(Distance(R^{T_j}(A,x), R^{T_j}(B,x))) \qquad (1)$$

$TI \subseteq \{T_1,...T_i\}$ is the set of time intervals for which comparable ratings where found. "Comparable ratings" are ratings given by different members on the same expert in the same context within a pre defined time interval. *Distance* is a function such as the *Euclidean distance* or a variation of *Pearson correlation,* which is embedded with time interval values and the values of the dimensions in the reputation vectors.

The Similarity of two members A and B at time t is a value in the range [0,1] which is defined by:

$$SIM^t(A,B) = 1 - (Difference^t(A,B)) \qquad (2)$$

The implicit trust is a value in the range of [0,1] which is defined by:

$$TrustMember^{t}(A,b) = TM^{t}(A,B) = SIM^{t}(A,B) \cdot SConf_{\beta}(A,B) \qquad (3)$$

$$SConf_{\beta}(A,B) = \beta + (1-\beta) \cdot cdf(N_{A}, n_{B}) \qquad (4)$$

We define the confidence of member A in member B, which computes the significance of the transactions between A and B relative to the overall transactions in which A was involved.

Let n(A,B) denote the number of ratings used to compare between A and B, let NA = {n(A,B)IB has comparable ratings with A}. Then the confidence of A in the similarity with B is defined as:

$$SConf_{\beta}(A,B) = \beta + (1-\beta) \cdot cdf(N_{A}, n_{B})$$

Where CDF is the Cumulative Distribution Function. This function describes the statistical distribution of the number of comparable ratings A has with any other member. CDF(NA, nB) returns for nB in the sample NA the probability of receiving this outcome or a lower one. $\beta$ is the maximum Trust we allow A to have in B given perfect similarity Sim(A,B) = 1 and minimum experience; (1 - $\beta$) gives weight to previous experience.

"Experience" is the number of comparable rating the two members (A and B) had. Considering all other members A had comparable ratings with, we try to measure the relative "experience" of B and A (the exact measure is calculated by the CDF function). It has no influence on $\beta$ but we know that when there is much experience in the community we can lower the $\beta$ and give more weight to experience (consider two members B and C having the same similarity with A but B had only 10 comparable ratings with A while C had 150, using this method we assure that C will be more trusted by A).

*cdf-* cumulative distribution function.

$n_{K}$ - the amount of ratings used to compare between members A and K.

$N_{A} = \{n_{K} \mid K \text{ has comparable rating with } A\}$

For each member K , A had comparable rating with, this set consist of the amounts of comparable ratings.

For example if A had 100 comparable rating with B ; 70 with C and 5 with D: $N_{A} = \{100,70,5\}$.

The $\alpha$ *Trust Set* of a member A at time *t* is:

$$TrustSet_{\alpha}^{t}(A) = \{B \mid TM^{t}(A,B) >= \alpha\} \qquad (5)$$

Constricting Knots

The community graph at time *t* is the weighted directed graph *G* = (*V, E*) (see Fig. 1A), where nodes represent members of the community and edges represent existing level of trust from the member to other members. The weight of an edge from A to B is $TM^{t}(A,B)$ and the weight of the edge from B to A is $TM^{t}(B,A)$. The community graph of level $\alpha$ at time *t* is the sub graph $G_{\alpha} = (V_{\alpha}, E_{\alpha})$ where $V\alpha = V$ and $E\alpha = \{EG, EB\}$ consists of all edges which are divided to Good Edges (with weights greater or equal to $\alpha$) and Bad Edges. For the purpose of preliminary simulation the present invention uses a simple algorithm motivated by [2] to create clusters, i.e. sub-graphs. At first, an algorithm from [2], which is based on distance *k*-cliques, is used. A sub-graph is defined as a distance *k*-clique if any two vertices in it are connected by a path of length maximum *k*. The model of the present invention puts a constraint of zero bad edges in a cluster. According to this algorithm, any two nodes, e.g. A and B, are in the same sub-graph (cluster) of G if there is a path from A to B as well as a path from B to A of edges with weight $\geq \alpha$, resulting in a path of weight $\geq \alpha \cdot k$ and $\leq k$.

Calculating Local Reputation of members and experts

In knot of level $\alpha$, which is represented by the graph $G_{SC\alpha} = (V_{SC\alpha}, E_{SC\alpha})$, the local reputation of a member *v* (MLR) is the relative portion of trust the member gains in the knot:

$$MLR^{t}(G_{SC\alpha}, v) = \frac{\sum_{u \in V_{SC\alpha}} TM^{t}(u,v)}{\sum_{\forall u,k \in V_{SC\alpha}} TM^{t}(u,k)} \qquad (6)$$

This division computes the relative amount of trust member *u* has within his knot with respect to the total trust there is in this knot (between any two members).

The local reputation of expert *x* (*ELR*) is obtained by:

$$ELR^t(G_{SC\alpha}, x) = \frac{\displaystyle\sum_{\forall v \in V_{SC\alpha}, DTE^t(v,x) \neq \bot} DTE^t(v,x) \cdot MLR^t(G_{SC\alpha}, v)}{\displaystyle\sum_{\forall v \in V_{SC\alpha}, DTE^t(v,x) \neq \bot} MLR^t(G_{SC\alpha}, v)} \tag{7}$$

This division is required to keep the value in the range of [0,1].

$DTE^t(A,x)$ is the direct trust A has in expert *x*, which is calculated by the average of the ratings that A gave *x*, weighted according to time interval weights.

$$DTE^t(A,x) = \sum_{T_j \in TI} W_{T_j} \cdot R^{T_j}(A,x) \tag{8}$$

Computing the Trust in Expert

The trust in an expert can be computed according to the following procedure. If A has direct (first-hand) experience with x in the time interval [t-Tmax, t]:

$$TrustExpert^t(A,x) = TE^t(A,x) = DTE^t(A,x) \tag{9}$$

Or, if members of A's TrustSet have direct experience with x in [t - T max, t]:

$$TE^t(A,x) = \frac{\sum_{B \in TrustSet^t(A), DTE^t(B,x) \neq \bot} DTE^t(B,x) \cdot TM^t(A,B)}{\sum_{B \in TrustSet^t(A), DTE^t(B,x) \neq \bot} TM^t(A,B)} \tag{10}$$

Or, if no recent ratings exist within A's trust set w.r.t. x, or if A's trust set is smaller than some system threshold parameter:

$$TE^t(A,x) = ELR^t(G_{KN\alpha}(A), x) \tag{11}$$

Finally, if A has no input from a trust set or a knot:

$$TE^t(A,x) = ExpertGlobalReputation_t(G_{community}, x) = EGR^t(G_{community}, x) \tag{12}$$

The Expert Global Reputation (EGR) is calculated by:

$$EGR^t(G_{community}, x) = \frac{\sum_{i \in S} ELR^t(KN_i, x) \cdot Strength(KN_i) \cdot RatingPower(KN_i, x)}{\sum_{i \in S} Strength(KN_i) \cdot RatingPower(KN_i, x)} \tag{13}$$

where:

S is the set of all knots of level a in which members rated x.
RatingPower(KNi,x) is the number of ratings used to calculate the ExpertLocalReputation of x within knot KNi.

The strength of a sub-community containing a single member is 0, (it has no impact on the result of this computation). It should be noted that even though in EGR all members of the community are potentially considered, stronger weight is given to members of tight knots since their individual ratings reinforce each other.

One of the major benefits of the invention is in the ability to handle adversaries. Consider the two primary types of adversaries presented by [4]: selfish peers and malicious peers. Selfish members are using the system while contributing minimal or no information themselves to the knowledge accumulated within the community. The incentive for being unselfish in the model of the method of the invention is getting accurate information from trusted members. Without providing rating one cannot have Trust Set nor can she belongs to a knot (due to lack of trust in her). In order to get the most out of the community services, one must provide ratings. Malicious members who wish to harm the community by attempting to bias community rating and affect a member's reputation, may only do so once the member belongs to a knot. However in order to be part of a knot, one must be trusted by a group of members. Using similarity as a measure of trust one cannot imitate other ratings constantly over time. In this case dishonest rating will affect the knot for a very short time.

The method of the invention allows having knots based on some very particular measures that may be of interest to other communities. Knots of one Community can be used as a bootstrap for other new communities even if the two communities are of different domains, considering only universal dimensions. An expert may use the reputation she gained in one community as some sort of external community-credentials in another community. A member registered to a community, in which her trusted members are also registered, may gain her Trust Set immediately.

## Bibliography

[1] Sudip Chakraborty and Indrajit Ray. Trustbac: integrating trust relationships into the rbac model for access control in open systems. In SACMAT '06: Proceedings of the eleventh ACM symposium on Access control models and technologies, pages 49-58, New York, NY, USA, 2006. ACM Press.

[2] Jubin Edachery, Arunabha Sen, and Franz-Josef Brandenburg. Graph clustering using distance-k cliques. In Graph Drawing, pages 98-106, 1999.

[3] Evangelos Kotsovinos, Petros Zerfos, Nischal M. Piratla, and Niall Cameron. Jiminy: A scalable incentive-based architecture for improving rating quality.

[4] Sergio Marti and Hector Garcia-Molina. Taxonomy of trust: Categorizing p2p reputation systems. Computer Networks, 50(4):472-484, March 2006.

[5] L. Mui, M. Mohtashemi, and A. Halberstadt. A computational model of trust and reputation for e-businesses. In HICSS '02: Proceedings of the 35th Annual Hawaii International Conference on System Sciences (HICSS'02)-Volume 7, page 188, Washington, DC, USA, 2002. IEEE Computer Society.

## Claims

1. A method for creating trust-based communities of anonymous users, said trust-based communities comprising a first community, each of said users having an identity being unknown to each other and interacting via a computer data network, wherein the first community can be represented by a graph, said graph comprising nodes (100), each node representing a single member of the first community, and said graph comprising directed edges (200), each directed edge being from a first node to a second node each directed edge representing the trust from the member represented by the first node to the member represented by the second node, each directed edge having a weight; the method comprising the steps:

   a. creating by a software module, one or more knots, wherein a knot is a group of members of the community having overall strong trust relations among them;
   b. computing by said computer a trusted reputation of a first member of said first community by using information provided only by members of the knot to which the first member belongs;

   wherein said one or more knots (300) are created by partitioning the graph to a collection of subgraphs, where in each subgraph any two nodes (100) are connected by a path of edges of length of a predefined parameter K or less and in each subgraph the number of negative edges, being the edges having a weight that is not at least $\alpha$, does

not exceed a threshold parameter,
wherein $\alpha$ denotes a predefined threshold of trust.

2. A method according to claim 1, comprising valueing recommendations of an expert for member A of the first community according to a parameter called the $\alpha$ *Trust Set* of member A at time *t,* defined by:

$$TrustSet_{\alpha}^{t}(A) = \{B \mid TM^{t}(A,B) >= \alpha\}$$

where:

B denotes member B;
$TM^t$ - denotes the trust of member A in member B in time t.

3. A method according to claim 2, comprising computing a local reputation $^t(G_{SC\alpha}, v)$ of a member v in a knot $G_{SC\alpha}$ of the level $\alpha$ in the first community, v being a member of knot $G_{SC\alpha}$, according to:

$$MLR^{t}(G_{SC\alpha},v) = \frac{\sum\limits_{u \in V_{SC\alpha}} TM^{t}(u,v)}{\sum\limits_{\forall u,k \in V_{SC\alpha}} TM^{t}(u,k)}$$

where
$V_{SC\alpha}$ is the set of members of the knot $G_{SC\alpha}$.

4. A method according to claim 3comprising computing a local reputation $ELR^t(G_{SC\alpha}, x)$ of an expert x for a knot $G_{SC\alpha}$ of the level $\alpha$ in the first community according to:

$$ELR^{t}(G_{SC\alpha},x) = \frac{\sum\limits_{\forall v \in V_{SC\alpha}, DTE^{t}(v,x) \neq \perp} DTE^{t}(v,x) \cdot MLR^{t}(G_{SC\alpha},v)}{\sum\limits_{\forall v \in V_{SC\alpha}, DTE^{t}(v,x) \neq \perp} MLR^{t}(G_{SC\alpha},v)}$$

the method comprising computing the direct trust a member A has in the expert x according to:

$$DTE^{t}(A,x) = \sum\limits_{T_j \in TI} W_{T_j} \cdot R^{T_j}(A,x)$$

where:

$V_{sc\alpha}$ is the set of members of the knot $G_{SC\alpha}$ of level $\alpha$;
$W_T$ - denotes a
weight of a time interval T;
$R^T(A, x)$ is a rating that A gave x at time interval T;
$T_j$ - denotes a time interval;
$TI = \{T_1, ... T_j\}$ is a set of time intervals for which comparable ratings where found.

5. A method according to claim 4, comprising computing a global reputation $EGR^t(G_{community}, x)$ of the expert x according to:

$$EGR^t(G_{community}, x) = \frac{\sum_{i \in S} ELR^t(KN_i, x) \cdot Strength(KN_i) \cdot RatingPower(KN_i, x)}{\sum_{i \in S} Strength(KN_i) \cdot RatingPower(KN_i, x)}$$

where:

$G_{community}$ - denotes the graph of the community
S - denotes the set of all knots of level $\alpha$ in which members rated x; and
$KN_i$ - denotes a specific knot;

wherein the strength $Strength(KN_i)$ of a knot is a function of the number of members and the number of the relevant ratings in that knot, and wherein $RatingPower(Kn_i, x)$ is a number of ratings used to calculate a reputation of x within knot $KN_i$.

6. A method according to claim 1, wherein the knots are constructed by decomposing the graph to disjoint subgraphs such that in each subgraph, all nodes are connected directly or indirectly by a path of less than K+1 edges, wherein the amount of edges with trust above alpha within subgraphs are maximized and the number of edges with trust below alpha within each subgraph are minimize, thereby maximizing the strength of the graph being the sum of strengths of all of its knots.

**Patentansprüche**

1. Verfahren zum Anlegen von vertrauensbasierten Gemeinschaften von anonymen Benutzern, wobei die vertrauensbasierten Gemeinschaften eine erste Gemeinschaft umfassen, jeder der Benutzer eine Identität hat, die den anderen Benutzern unbekannt ist, und über ein Computerdatennetzwerk interagiert, wobei die erste Gemeinschaft durch einen Graphen repräsentiert werden kann, der Graph Knoten (100) umfasst, jeder Knoten ein einzelnes Mitglied der ersten Gemeinschaft repräsentiert und der Graph gerichtete Kanten (200) umfasst, jeder gerichtete Graph von einem ersten Knoten zu einem zweiten Knoten verläuft, jede gerichtete Kante das Vertrauen repräsentiert, welches von dem Mitglied, das durch den ersten Knoten repräsentiert wird, dem Mitglied, das durch den zweiten Knoten repräsentiert wird, entgegengebracht wird, und jede gerichtete Kante ein Gewicht besitzt,
wobei das Verfahren die folgenden Schritte umfasst:

a. Erzeugen eines oder mehrerer *Knots* mittels eines Software-Moduls, wobei ein *Knot* eine Gruppe von Mitgliedern der Gemeinschaft ist, welche insgesamt untereinander starke Vertrauensbeziehungen haben,
b. Berechnen einer vertrauenswürdigen Reputation eines ersten Mitglieds der ersten Gemeinschaft mittels des Computers, durch Verwenden von Information, die nur von Mitgliedern des *Knot,* zu dem das erste Mitglied gehört, bereitgestellt wurde,

wobei der eine oder die mehreren *Knots* (300) durch Partitionieren des Graphen in eine Collection von Teilgraphen erzeugt wird/werden,
wobei in jedem Teilgraphen beliebige zwei Knoten (100) durch einen Pfad aus Kanten mit der Länge eines vordefinierten Parameters K oder weniger verbunden sind,
und in jedem Teilgraphen die Anzahl der negativen Kanten, d.h. der Kanten, deren Gewicht nicht mindestens $\alpha$ beträgt, einen Schwellenwertparameter nicht übersteigt,
wobei $\alpha$ einen vordefinierten Schwellenwert des Vertrauens bezeichnet.

2. Verfahren nach Anspruch 1, umfassend das Werten von Empfehlungen eines Experten für Mitglied A der ersten Gemeinschaft gemäß einem $\alpha$ *Trust Set* von Mitglied A zur Zeit *t* genannten Parameter, der definiert ist durch:

$$TrustSet^t_\alpha(A) = \left\{ B \mid TM^t(A, B) >= \alpha \right\}$$

worin

B das Mitglied B bezeichnet,
$TM^t$ - das Vertrauen des Mitglieds A in das Mitglied B zur Zeit t bezeichnet.

3. Verfahren nach Anspruch 2, umfassend das Berechnen einer lokalen Reputation $^t(G_{SC\alpha},v)$ eines Mitglieds $v$ in einem *Knot* $G_{SC\alpha}$ des Levels $\alpha$ in der ersten Gemeinschaft, wobei $v$ ein Mitglied des *Knot* $G_{SC\alpha}$ ist, gemäß:

$$MLR^t(G_{SC\alpha},v) = \frac{\sum\limits_{u \in V_{SC\alpha}} TM^t(u,v)}{\sum\limits_{\forall u,k \in V_{SC\alpha}} TM^t(u,k)}$$

worin $V_{SC\alpha}$ die Menge der Mitglieder des *Knot* $G_{SC\alpha}$ ist.

4. Verfahren nach Anspruch 3, umfassend das Berechnen einer lokalen Reputation $ELR^t(G_{SC\alpha},x)$ eines Experten $x$ für einen *Knot* $G_{SC\alpha}$ des Levels $\alpha$ in der ersten Gemeinschaft gemäß

$$ELR^t(G_{SC\alpha},x) = \frac{\sum\limits_{\forall v \in V_{SC\alpha}, DTE^t(v,x) \neq \perp} DTE^t(v,x) \cdot MLR^t(G_{SC\alpha},v)}{\sum\limits_{\forall v \in V_{SC\alpha}, DTE^t(v,x) \neq \perp} MLR^t(G_{SC\alpha},v)}$$

wobei das Verfahren das Berechnen des direkten Vertrauens, welches ein Mitglied A in den Experten x hat, gemäß

$$DTE^t(A,x) = \sum\limits_{T_j \in TI} W_{T_j} \cdot R^{T_j}(A,x)$$

worin

$V_{SC\alpha}$ die Menge der Mitglieder des *Knot* $G_{SC\alpha}$ des Levels $\alpha$ ist,
$W_T$ ein Gewicht eines Zeitintervalls T bezeichnet,
$R^T(A, x)$ eine Bewertung (Rating) ist, die A zum Zeitintervall T $x$ gegeben hat,
$T_j$ ein Zeitintervall bezeichnet,
$TI = \{T_1,...T_j\}$ eine Menge von Zeitintervallen ist, für die vergleichbare Bewertungen gefunden wurden,

umfasst.

5. Verfahren nach Anspruch 4, umfassend das Berechnen einer globalen Reputation $EGR^t(G_{community},x)$ des Experten $x$ gemäß:

$$EGR^t(G_{community},x) = \frac{\sum_{i \in S} ELR^t(KN_i,x) \cdot Strength(KN_i) \cdot RatingPower(KN_i,x)}{\sum_{i \in S} Strength(KN_i) \cdot RatingPower(KN_i,x)}$$

worin:

$G_{community}$ - den Graphen der Gemeinschaft bezeichnet,
S - die Menge aller *Knots* des Levels $\alpha$, in welchem Mitglieder $x$ bewertet haben, bezeichnet, und
$KN_i$ einen spezifischen *Knot* bezeichnet,

wobei die Stärke *Strength $KN_i$* eines *Knot* eine Funktion der Anzahl der Mitglieder und der Anzahl der relevanten Bewertungen in diesem *Knot* ist und wobei *RatingPower($Kn_i$,x)* eine Anzahl von Bewertungen ist, die zur Berechnung einer Reputation von $x$ innerhalb des *Knot $KN_i$* verwendet werden.

6. Verfahren nach Anspruch 1, wobei die *Knots* konstruiert werden durch Zerlegen des Graphen in disjunkte Teilgraphen, und zwar derart, dass in jedem Teilgraphen alle Knoten direkt oder indirekt durch den Pfad aus weniger als K+1 Kanten verbunden sind, wobei die Menge der Kanten mit einem Vertrauen größer alpha innerhalb von Teilgraphen maximiert wird und die Anzahl der Kanten mit Vertrauen kleiner alpha innerhalb jedes Teilgraphen minimiert wird, wodurch die Stärke des Graphen, welche die Summe der Stärken aller seiner *Knots* ist, maximiert wird.

## Revendications

1. Procédé pour créer des communautés d'utilisateurs anonymes basées sur la confiance, lesdites communautés basées sur la confiance comprenant une première communauté, chacun desdits utilisateurs possédant une identité inconnue de chaque autre et interagissant par l'intermédiaire d'un réseau de données d'ordinateur, dans lequel la première communauté peut être représentée par un graphique, ledit graphique comprenant des cellules (100), chaque cellule représentant un seul membre de la première communauté, et ledit graphique comprenant des arêtes orientées (200), chaque arête orientée partant d'une première cellule vers une deuxième cellule, chaque arête orientée représentant la confiance du membre représenté par la première cellule vis-à-vis du membre représenté par la deuxième cellule, chaque arête orientée présentant un poids, le procédé comprenant les étapes suivantes:

   a. créer par un module logiciel, un ou plusieurs noeud(s), dans lequel un noeud est un groupe de membres de la communauté qui présentent de fortes relations de confiance globales entre eux;
   b. calculer, à l'aide dudit ordinateur, une réputation de confiance d'un premier membre de ladite première communauté en utilisant des informations fournies uniquement par des membres du noeud auquel le premier membre appartient,

   dans lequel ledit/lesdits un ou plusieurs noeud(s) (300) est (sont) créé(s) en divisant le graphique en une série de sous-graphiques, dans lequel dans chaque sous-graphique chaque cellule (100) est connectée à une autre par un chemin d'arêtes d'une longueur d'un paramètre prédéfini K ou moins dans chaque sous-graphique, le nombre d'arêtes négatives, à savoir les arêtes dont le poids n'est pas au moins égal à $\alpha$, ne dépassant pas un paramètre de seuil, dans lequel $\alpha$ désigne un seuil de confiance prédéfini.

2. Procédé selon la revendication 1, comprenant la valorisation de recommandations d'un expert pour le membre A de la première communauté selon un paramètre appelé le $\alpha$ *Trust Set* du membre A au temps *t,* défini par:

$$TrustSet_{\alpha}^{t}(A) = \{B \mid TM^{t}(A,B) >= \alpha\}$$

où:

B désigne le membre B, et
$TM^{t}$ désigne la confiance du membre A vis-à-vis du membre B au temps t.

3. Procédé selon la revendication 2, comprenant le calcul d'une réputation locale $^{t}(G_{SC\alpha},v)$ d'un membre v dans un noeud $G_{SC\alpha}$ du niveau $\alpha$ dans la première communauté, v étant un membre du noeud $G_{SC\alpha}$, selon:

$$MLR^{t}(G_{SC\alpha},v) = \frac{\sum_{u \in V_{SC\alpha}} TM^{t}(u,v)}{\sum_{\forall u,k \in V_{SC\alpha}} TM^{t}(u,k)}$$

où:

$V_{SC\alpha}$ est l'ensemble de membres du noeud $G_{SC\alpha}$.

4. Procédé selon la revendication 3, comprenant le calcul d'une réputation locale $ELR^{t}(G_{SC\alpha},x)$ d'un expert x pour un noeud $G_{SC\alpha}$ du niveau $\alpha$ dans la première communauté, selon:

$$ELR^t(G_{SC\alpha},x) = \frac{\sum\limits_{\forall v \in V_{SC\alpha}, DTE^t(v,x) \neq \perp} DTE^t(v,x) \cdot MLR(G_{SC\alpha},v)}{\sum\limits_{\forall v \in V_{SC\alpha}, DTE^t(v,x) \neq \perp} MLR(G_{SC\alpha},v)}$$

le procédé comprenant le calcul de la confiance directe qu'un membre A a vis-à-vis de l'expert x selon:

$$DTE^t(A,x) = \sum_{T_j \in TI} W_{T_j} \cdot R^{T_j}(A,x)$$

où:

$V_{SC\alpha}$ est l'ensemble de membres du noeud $G_{SC\alpha}$ de niveau $\alpha$;

$W_T$ désigne le poids d'un intervalle de temps T;

$R^T(A,x)$ est une évaluation que A a donné à x à l'intervalle de temps T;

$T_j$ désigne un intervalle de temps; et

$TI = \{T_1, ..., T_i\}$ est un ensemble d'intervalles de temps pour lesquelles des évaluations comparables ont été trouvées.

5. Procédé selon la revendication 4, comprenant le calcul d'une réputation globale $EGR^t(G_{community},x)$ de l'expert x selon:

$$EGR^t(G_{community},x) = \frac{\sum_{i \in S} ELR^t(KN_i,x) \cdot Strength(KN_i) \cdot RatingPower(KN_i,x)}{\sum_{i \in S} Strength(KN_i) \cdot RatingPower(KN_i,x)}$$

où:

$G_{community}$ désigne le graphique de la communauté;

S désigne l'ensemble de tous les noeuds de niveau $\alpha$ dans lesquels les membres ont évalué x; et

$KN_i$ désigne un noeud spécifique,

dans lequel la force *Strength(KNi)* d'un noeud est une fonction du nombre de membres et du nombre d'évaluations pertinentes dans ce noeud, et

dans lequel *RatingPower(KN_i,x)* est un nombre d'évaluations utilisées pour calculer une réputation de x à l'intérieur du noeud $KN_i$.

6. Procédé selon la revendication 1, dans lequel les noeuds sont construits en décomposant le graphique en des sous-graphiques disjoints de telle sorte que dans chaque sous-graphique, toutes les cellules soient connectées directement ou indirectement par un chemin de moins de K+1 arêtes, dans lequel la quantité d'arêtes affichant un degré de confiance au-dessus d'alpha à l'intérieur des sous-graphiques est maximisée, et le nombre d'arêtes affichant un degré de confiance en dessous d'alpha à l'intérieur de chaque sous-graphique est minimisé, maximisant de ce fait la force du graphique qui correspond à la somme des forces de la totalité de ses noeuds.

**FIG. 1A**

**FIG. 1B**

```
┌─────────────────────────┐
│   Direct Experience     │──── 600
└─────────────────────────┘
            │
            ▼
┌─────────────────────────┐
│      Trust Set          │──── 610
└─────────────────────────┘
            │
            ▼
┌─────────────────────────┐
│   Local Reputation      │──── 620
└─────────────────────────┘
            │
            ▼
┌─────────────────────────┐
│   Global Reputation     │──── 630
└─────────────────────────┘
```

# FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004088369 A
- EP 1528498 A
- US 2004122803 A

### Non-patent literature cited in the description

- Trustbac: integrating trust relationships into the rbac model for access control in open systems. **SUDIP CHAKRABORTY ; INDRAJIT RAY.** SACMAT '06: Proceedings of the eleventh ACM symposium on Access control models and technologies. ACM Press, 2006, 49-58
- **JUBIN EDACHERY ; ARUNABHA SEN ; FRANZ-JOSEF BRANDENBURG.** Graph clustering using distance-k cliques. *Graph Drawing,* 1999, 98-106
- **EVANGELOS KOTSOVINOS ; PETROS ZERFOS ; NISCHAL M. PIRATLA ; NIALL CAMERON. JIMINY.** *A scalable incentive-based architecture for improving rating quality*
- **SERGIO MARTI ; HECTOR GARCIA-MOLINA.** Taxonomy of trust: Categorizing p2p reputation systems. *Computer Networks,* March 2006, vol. 50 (4), 472-484
- A computational model of trust and reputation for e-businesses. **L. MUI ; M. MOHTASHEMI ; A. HALBERSTADT.** HICSS '02: Proceedings of the 35th Annual Hawaii International Conference on System Sciences (HICSS'02). IEEE Computer Society, 2002, vol. 7, 188